Europäisches Patentamt

(19) European Patent Office

Office européen des brevets

(11) EP 0 708 722 B1

(12) EUROPEAN PATENT SPECIFICATION

(45) Date of publication and mention
of the grant of the patent:
**01.10.1997 Bulletin 1997/40**

(21) Application number: **94924293.7**

(22) Date of filing: **27.07.1994**

(51) Int. Cl.$^6$: **B60T 13/72**

(86) International application number:
**PCT/EP94/02481**

(87) International publication number:
**WO 95/03966 (09.02.1995 Gazette 1995/07)**

(54) **A VEHICLE BRAKE SYSTEM HAVING AN ELECTRONICALLY CONTROLLED BOOSTER**

FAHRZEUGBREMSANLAGE MIT ELEKTRONISCH GESTEUERTEM
BREMSKRAFTVERSTÄRKER

SYSTEME DE FREINAGE DE VEHICULE COMPORTANT UN DISPOSITIF ELECTRONIQUE
D'INTENSIFICATION DU FREINAGE

(84) Designated Contracting States:
**DE ES FR GB IT**

(30) Priority: **27.07.1993 DE 4325198**
**05.10.1993 DE 4333986**
**12.01.1994 DE 4400688**

(43) Date of publication of application:
**01.05.1996 Bulletin 1996/18**

(73) Proprietor:
**LUCAS INDUSTRIES PUBLIC LIMITED COMPANY**
**Solihull, West Midlands B91 3TX (GB)**

(72) Inventors:
• **HEIBEL, Helmut**
**D-56424 Moschheim (DE)**
• **RENN, Hans-Werner**
**D-56626 Andernach (DE)**
• **MICHELS, Erwin**
**D-56829 Kail (DE)**
• **KOHRT, Jens-Peter**
**D-56075 Koblenz (DE)**

• **DIERINGER, Werner**
**D-56179 Vallendar (DE)**
• **MOHR, Kurt**
**D-56283 Halsenbach-Ehr (DE)**

(74) Representative: **Schmidt, Steffen J., Dipl.-Ing.**
**Wuesthoff & Wuesthoff,**
**Patent- und Rechtsanwälte,**
**Schweigerstrasse 2**
**81541 München (DE)**

(56) References cited:
EP-A- 0 327 276          EP-A- 0 379 329
EP-A- 0 417 945          DE-A- 3 902 215
DE-U- 9 202 154          FR-A- 2 636 905

• PATENT ABSTRACTS OF JAPAN vol. 11, no. 221
(M-608) 17 July 1987 & JP,A,62 037 261
(JIDOSHA KIKI CO.) 18 February 1987
• PATENT ABSTRACTS OF JAPAN vol. 11, no. 128
(M-583) 22 April 1987 & JP,A,61 268 560 (NISSAN
MOTOR CP.) 28 November 1986

## Description

The invention concerns a vehicle brake system having an electronically controlled brake booster in which the maximally possible amplification is initiated when the actuation velocity of the brake pedal exceeds a given threshold value.

The desired result of vehicle brake systems having brake boosters is to optimally perform a braking operation initiated by the driver even if the driver's behavior is not always commensurate with the respective situation involved. To this end, electromagnetically actuated control means for additional air is provided which is activated in response to the actuation dynamics of the brake pedal (see German patent application DE-A-42 17 409), which is published between the second and third priority dates of the present specification.

In the case of emergency braking, when the braking operation is enhanced by a brake booster, the boosting operation has been increased to the extent as allowed by the pressure differential in the individual chambers of the brake booster. The actuation velocity of the brake pedal is used as the triggering criterion. As soon as a given threshold value of the actuation velocity is surpassed, the maximum possible amplification of the brake boosting operation is initiated. Although this operation results in a considerably shortened brake path, the driver is deprived of the control of the braking operation in that the initiated full braking proceeds entirely automatically, in other words the driver is no longer in a position to intervene in the braking operation. It is however desirable to stop full braking or emergency braking operations by an intervention on the part of the driver, for instance when the danger does not exist anymore.

DE-A 39 02 215 discloses a vacuum brake booster in which a contact switch is provided in the region of movement of the valve piston in the control valve housing. The first contact of the contact switch is a metallic ring seated in a recess in the control valve housing. The second contact of the contact switch is the valve piston itself, in which an axially slidable metallic contact member is guided in a guide sleeve of insulating material which is arranged in a ring, and is biased by means of a pressure spring and establishes an electrical connection between the ring and the valve piston. A valve is connected to two contact elements provided in the control valve housing, in which the contact element cooperating with the valve piston is biased against the valve piston by means of a pressure spring. The pressure spring is always loaded so that the connection between the operating chamber of the brake booster and the source of vacuum is free. Upon actuation, the valve member becomes detached from the ring such that the power supply to the valve and consequently also the connection between the operating chamber and the source of vacuum is interrupted.

EP-A-0 327 276 specifies a brake booster in which a switch device is disposed besides a valve element for actuating brake warning lights, and an abutment element is carried by the valve element, said switch device being actuated in response to a movement of the abutment element with the valve element. The assembly containing the switch device is fixed to a housing of the brake booster which contains the servo piston.

DE-U-92 02 154, which shows all the features of the preamble of each of the independent claims, discloses a pneumatic brake booster for motor vehicles, comprising a housing having a first chamber and a second chamber separated from each other by a movable wall, a first valve is adapted to be controlled by a mechanical actuating member to generate between the two chambers a pressure difference for moving the movable wall, and a second valve operable by an electromagnet to vary the pressure difference between the two chambers. In order to improve the security of this brake booster during the operation, i.e. to avoid an unintended actuation of the second valve, thereby causing an undesired emergency braking, there is provided a safety valve connecting the two chambers with each other. This safety valve effects an at least partial pressure compensation between these chambers if the movable wall has moved by more than a predetermined distance with respect to the actuating member.

The safety valve comprises a valve seat that is arranged in a valve housing of the first valve. The housing is connected to the movable wall for joint movement and cooperates with a valve body that is biased in the direction of said valve seat. The valve body is guided in an abutment member rigidly connected to the actuating member, so as to be movable by the predetermined distance.

JP-A-61 268560 discloses a hydraulic braking system that allows a brake manipulation matching the human sense. To achieve this, an input sensor detects the movements in the axial direction of an input rod actuated by a brake pedal and an output sensor detects the movement in the axial direction of an output rod. A differentiating circuit receives the output signal of the input sensor, differentiates it and provides a transfer speed signal of the input rod. The output signal of the two sensors and the differentiating circuit is fed into a logic circuit. The output signal of this logic circuit supplied to a control valve, and an adjustment of the divergence of the control valve is thereby effected.

This document does not disclose any hint to the solution of the present invention, since the problem of this piece of prior art is completely different.

JP-A-62 037261 discloses the use of a small-sized and cheap pressure sensor of a maximum allowable low load. In this document a booster mechanism is used to intensify a stepping force acting on a brake pedal. The body of the booster mechanism is interlocked with the brake pedal, and an input detecting device is provided within the body. The detecting device has an elastic body between a pressing plate and a push rod, housed in the larger bore of a stepped bore and couples a pressure transmission member to the outside of a stepped bore formed on the pressing plate in an axial direction so as to be freely slidable. Inside the stepped bore there is provided a holder housing a pressure sensor, as to be freely slidable, and a spring is provided between the hold and the body, so that the pressure sensor will not be exposed to a load more than necessary.

DE-A-33 46 140 describes a vacuum brake booster in which a piston rod operable by a brake pedal is connected to a control valve piston which, via a reaction disk, acts on a pressure rod that is connected to the master cylinder. The reaction disk is received in a stepped bore and the free end of the control valve piston is provided with a pedal received in a stepped portion which limits the axial movability of the control valve piston.

EP-A-0 379 329 discloses a brake booster in which a switch having two touch contacts is provided in the housing of the brake booster. An actuating member axially displaced by a brake pedal includes a laterally protruding bar which is adapted to bridge the two contacts and thus close a circuit.

Based on the above, the problem underlying the present invention is to provide an apparatus by which a driver-initiated sudden stopping of an emergency braking operation is determined safely and free of interferences.

For solving said problem, the afore named vehicle brake system has been further developed by the features of the characterizing portions of claims 1 and 12.

It is achieved with this construction that the switch means is actuated only by the driver's withdrawing the brake pedal in such a manner that a signal is generated which is supplied to the electronic control means of the vehicle brake system to take back again the maximum level control of the brake amplification.

In the placement of the switch means one has to take care that the latter delivers the afore-mentioned signal for taking back the maximum amplification only when the driver relieves pressure from the brake pedal in the process of emergency or full braking, in other words when he withdraws his foot to an extent that the brake pedal is released. In that case, the signal generated by the switch means causes the maximum brake boosting to become terminated again and the normal brake amplifier response curve is resumed.

Further characteristics and advantages entailed by the invention will be described in greater detail in the following description of embodiments of the invention, with reference to the enclosed drawings.

Fig.1 shows a brake booster in a schematic sectional view.

Fig.2 shows a controllable valve of the brake booster according to fig.1 of a first embodiment in an enlarged schematic sectional view.

Fig.3 shows a controllable valve of a brake booster according to fig.1 of a second embodiment in an enlarged schematic sectional view.

Fig.4 shows a section of the valve according to fig.2 in another enlarged schematic sectional view.

Fig.5 shows a schematic view of a cross section along line V - V in fig.4 through the actuator with path limiting element.

Figs.6 to 8 show details of a brake system of another embodiment having a brake booster that is modified vis-à-vis figs.1 to 5, in which the function of the switch means is monitored.

Fig.9 shows another embodiment of a part of a vehicle brake system according to the invention in a perspective exploded view.

Fig.10 shows an assembly according to fig.9 in a partly sectional side view.

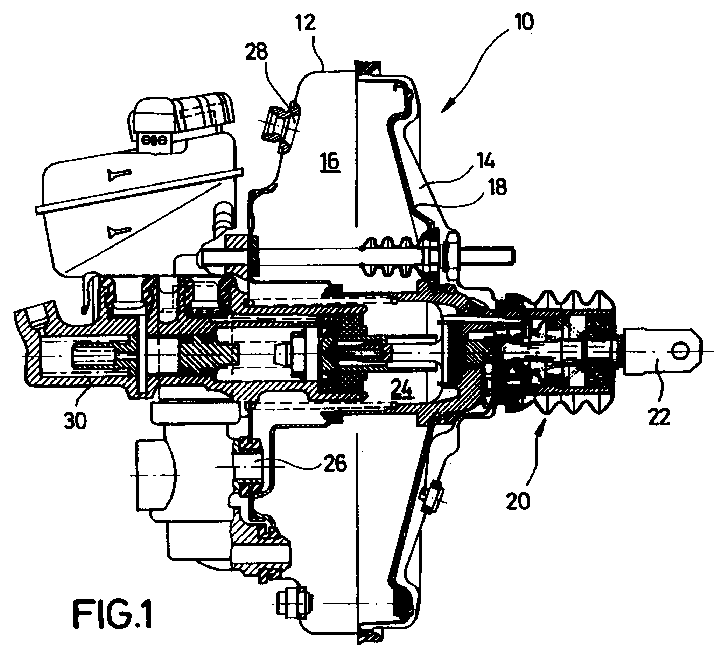

Fig.1 is a general view of a brake booster of a vehicle brake system which is provided with a switch means according to the invention.

The illustrated brake booster 10 has a substantially rotation-symmetrical housing 12 with a rear chamber 14 and a front chamber 16 which a separated by a movable partition 18. The brake booster includes a first controllable valve 20 which is connected to movable partition 18 for joint relative movement with respect to housing 12. The front end of a rod-shaped actuator 22 acts on valve 20, which, in the built-in or assembled condition, is connected to a brake pedal (not illustrated) of the motor vehicle.

Rear chamber 14 is connected to a defined central space 24 of the brake booster 10 by a check valve in such a way that air from said space 24 can flow into rear chamber 14, but cannot return. Central space 24 also communicates with a port 26 in housing 12 so as to admit air. Another port 28 in housing 12 connects front chamber 16 to an outside vacuum source.

A power output member 30 is provided in central space 24 of the brake booster and rests against controllable valve 20. Power output member 30 is provided to actuate a master brake cylinder (not illustrated).

In the inoperative condition illustrated, with the low-pressure or vacuum source switched off, atmospheric pressure prevails in both chambers 14 and 16. Vacuum builds up in front chamber 16 when the vacuum source is switched on, for instance, during running of the engine with whose intake pipe the vacuum port 28 communicates so that the movable partition 18 is shifted slightly forwardly, accompanied by movement of valve 20, whereby the pressure once again becomes balanced between the two chambers 14 and 16. This position of readiness makes sure that from here on the brake pressure booster can be actuated without a loss distance.

The brake booster operates in the usual manner when the brake is normally actuated by the driver and the connection between the two chambers 14 and 16 is interrupted via controllable valve 20 and ambient air flows into rear chamber 14. As a consequence, an actuating force amplified by the brake booster is available at power output member 30. This is true also in a case where vacuum continues to prevail in central space 24 as it does in front chamber 16.

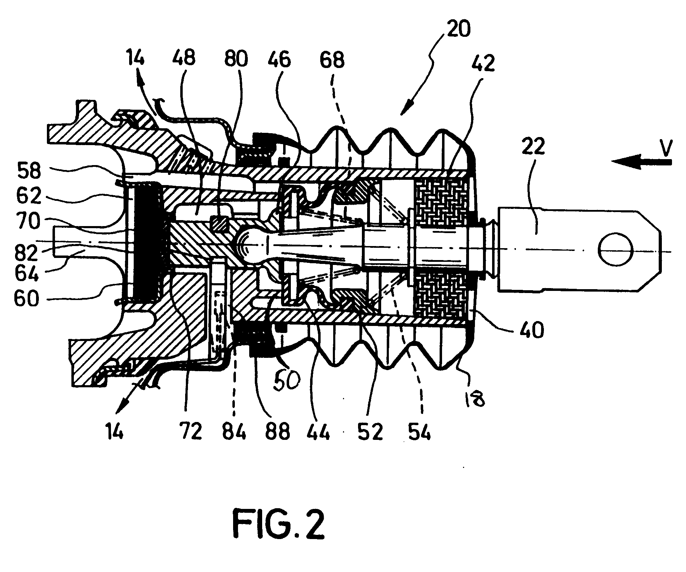

Fig.2 illustrates control valve 20 in more detail. Actuator 22 projects through an air-permeable cylindrical filter 40 into a control housing 40 which is rigidly connected to movable partition 18 and is adapted for axial displacement in housing 12. Actuator 22 carries a valve closure member 44 at its end being positioned in the interior of control housing 42, said valve closure member 44 being adapted to engage an inner valve seat 46 on a valve piston 48, as well as an outer valve seat 50 which is formed at the inner side of control housing 42. Valve piston 48 is positively connected to the free end of actuator 22. Valve closure member 44 is via a pretension sleeve 52 pressed against the inner valve seat 46 by means of a compression spring 54 which rests against actuator 22. Rear chamber 14 is sealed against front chamber 16, as a passage 58 has been locked.

Via a resilient member 60 received in a recess at the front end of the valve housing 42 as well as a compression rod 64 having a head flange portion 62, a forward movement in the direction of arrow V of actuator 22 is transmitted to an actuating piston of a master brake cylinder, not illustrated, of a brake system which is mounted to the end of the brake booster disposed at the side of the vacuum.

A second compression spring 68 which is arranged intermediate actuator 22 and valve closure member 44 is responsible for a pretensioning of actuator 22, or its inner valve seat 46, vis-à-vis valve closure member 44.

A sensor disk 70 is provided between valve piston 48 and the resilient disk-shaped member 60 which acts in the manner of an incompressible fluid, the axial movability of said disk 70 being limited by resilient member 60, on the one hand, and by a collar 72 acting as abutment, on the other hand, through which collar the actuator 22 extends and acts on sensor disk 70.

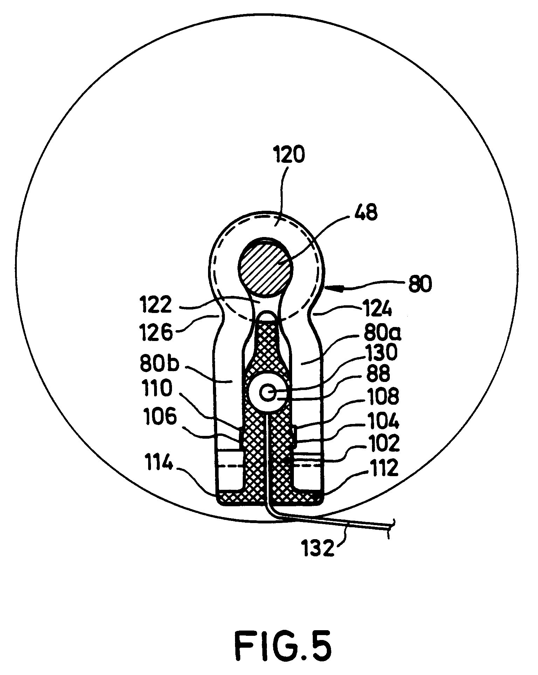

The axial movability of valve piston 48 and hence also that of actuator 22 which is connected to the valve piston 48 is limited by a path limiting element 80 that is positively fitted in an annular groove 82 formed in valve piston 48. Path limiting element 80 has the configuration of a substantially U-shaped clamp whose legs are in the center region angled whith the bent portions facing each other, so that valve piston 48 is securely enclosed by said legs. Path limiting element 80 extends into a channel 84 leading to rear chamber 14. A switch means 88 is disposed intermediate the two legs 80a, 80b (cf. fig. 5). The walls of channel 84 are formed as abutment surfaces 90, 92 between which path limiting element 80 is reciprocable in axial direction.

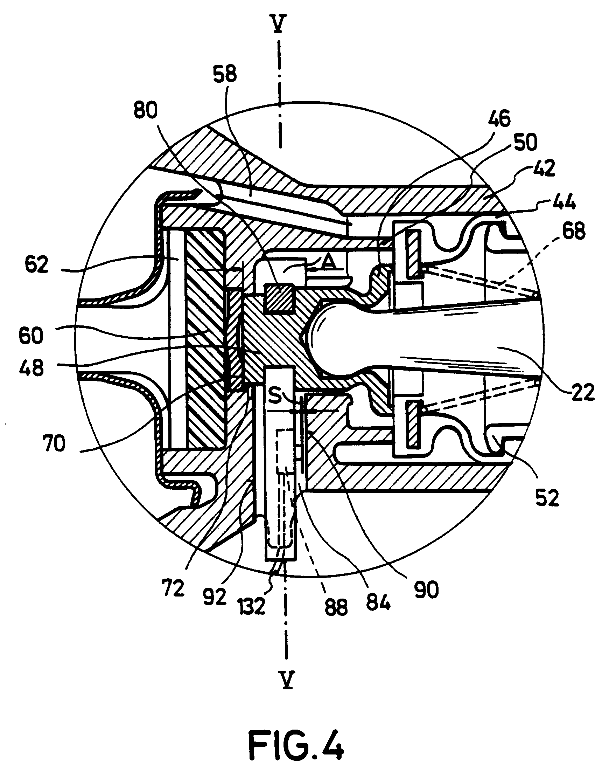

Fig. 4 illustrates in detail that distance A between collar 72 acting as abutment and abutment surface 90, at which switch means 88 can be actuated with the cooperation of path limiting element 80, is dimensioned such that when disk 70 rests against collar 72, path limiting element 80, or switch means 88 received in it, is still a path or distance S away from abutment surface 90. It is thus guaranteed that for actuating switch means 88, path limiting element 80 still has to cover the path or distance S in the direction of abutment surface 90.

Path or distance S is dimensioned such that an erroneous actuation of switch means 88 which, for instance, may occur due to a resetting by hydraulic forces of actuator 64, or disk 70, in an ABS mode of operation is excluded.

As will be explained in more detail in connection with the mode of operation hereinafter, control valve housing 42 is displaceable vis-à-vis housing 12 of the remaining brake booster, in a direction coaxially to actuator 22.

From this fact, another rule for dimensioning path or distance S results. Path or distance S is to be dimensioned such that an erroneous actuation of switch means 88 which may occur due to pressure impacts which are caused by the ABS mode of operation is excluded and which are directed in the opposite direction of the force exerted by the brake pedal and result in a relative movement between path limiting element 80 assigned to actuator 22 and abutment 90 which, together with path limiting element 80 causes an actuation of switch means 88.

The switch means as such may have the most different configurations. It has to be kept in mind that a short but defined switch path is important so that path or distance S is not changed by the respective switch means 88 used, or else the length of the actuation path in the interior of switch means 88 has to be added when dimensioning path or distance S.

Switch means 88 is received intermediate legs 80a and 80b of path limiting element 80, said switch means 88 being mounted in a shaped body 102 which is latched in accordingly shaped recesses 108 and 110 in legs 80a and 80b by means of two lateral latch lugs 104 and 106. Shaped body 102 is substantially T-shaped, the two laterally protruding projections 112 and 114 resting on the free ends of legs 80a and 80b such that the longitudinal movability of shaped body 102 by the two projections 112 and 114 together with the latch lugs 104, 105 is limited.

In the embracement region 120 of valve piston 48 by path limiting element 80, said valve piston is embraced about 340°, a small gap 122 remaining between legs 80a and 80b of path limiting element 80 through which said element 80 is shifted into groove 82 in valve piston 48. Both legs 80a and 80b have two angled sections 124, 126 by which the substantial embracement of valve piston 48 is achieved.

In the following, the function of the brake booster is explained in connection with path limiting element 80 and the different switch conditions of switch means 88, respectively.

In an initial position, the brake booster assumes the position illustrated in fig.1. Path limiting element 80 or switch means 88 received therein rests against abutment surface 90 whereby the final position of valve piston 48 coupled to actuator 22 and of valve closure member 44 is defined. Control valve housing 42 is pressed against path limiting element 80 by a spring (not illustrated) which is provided in the interior of brake booster housing 12, with the result that control valve 10 is opened and airing (rear) chamber 14 is connected to the atmosphere.

If, following starting of the vehicle engine, a vacuum is applied to front chamber 16, a pressure difference is established between either sides of movable partition 18. Due to said pressure difference, partition 18, together with control valve housing 42, moves in the direction of front chamber 16 until inner valve seat 46 becomes just closed by valve closure member 44. The brake booster remains in said position for as long as the pressure difference and the respective resetting forces of springs 54, 68 are balanced. Actuating the brake pedal and the ensuing shifting of actuator 22 result in a direct amplification of the brake force.

In the second functional position (partly loaded position), the brake booster supplies only part of its possible energy. This takes place during a normal braking operation. Inner valve seat 46 and outer valve seat 50 are then closed by valve closure member 44, and control member housing 42 is in the position in which it is shifted in the direction of front chamber 16, respectively.

The position of path limiting element 80 with respect to control valve housing 42 is the same both in the position of readiness and in the partly loaded position, in other words, a defined path or distance S is left free between path limiting element 80 and control valve housing 42, and abutment 90, respectively, the effect being that switch means 88 is in its non-actuated position.

Upon full braking, inner valve seat 46 is shifted with respect to valve closure member 44 in the direction of front pressure chamber 16 to an extent that atmospheric air is free to flow through filter 40 to rear chamber 14; the maximum possible pressure difference thus prevails in the booster system. Disk 70 is then urged into resilient element 60 by actuator 22. In said position, path limiting element 80 is in the proximitiy of, or in engagement with, abutment surface 92. The distance between switch means 88 and abutment 90 is the largest one in said condition so that switch means 88 is likewise non-actuated and no signal is supplied to the control means.

If the driver wants to abruptly stop the full braking operation, the brake pedal has to be released to this end almost completely so that resetting springs 54, 68 shift actuator 22 back in opposite direction to the direction of arrow V (fig.2), in which valve closure member 44 also moves away from outer valve seat 50. A pressure balance is thus established through passage 58 and channel 84 between front and rear chambers 16, 14.

Path limiting element 80, or switch means 88 disposed therein, rests against abutment 90 in said position so that an actuation of switch means 88 is effected whereby a signal is supplied to the control means. From the afore statements it is clear that to each functional position of the brake booster a defined position of path limiting element 80, or its switch means 88, can be assigned which results from the relative movement between control valve housing 42 and actuator 22, or the elements assigned to the latter.

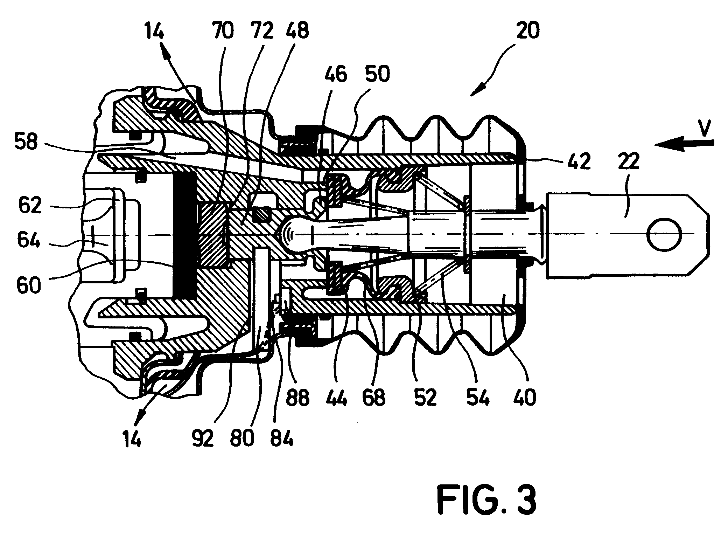

Switch means 88 may also be fitted into abutment surface 90 and actuated by path limiting element 80 (fig.3). A particularly simple embodiment is obtained when shaped body 102 (cf. fig.5) is made of insulating material and switch means 88 merely has a contact button 130 which, when abutment 90 is touched, establishes an electrical connection with the same.

A signal is supplied to the brake control means by an electrical connecting cable 132 which is is interpreted such that the brake booster rapidly falls back, or is rest to, its amplification characteristic. In this manner a driver-initiated full braking operation is abruptly stopped.

The dimensioning of distance A or path S in consideration of the vibrations that occur in each case, or pressure variations during the control of the ABS mode of operation effectively prevents erroneous initiations, in other words, abrupt stopping of full braking operations which are not intended by the driver.

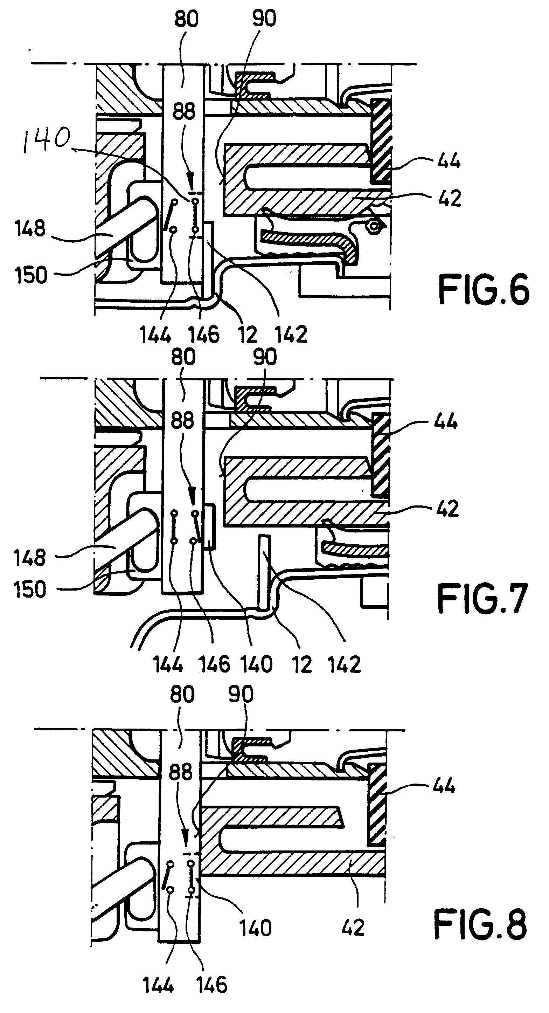

Figs. 6, 7 and 8 show modifications of the afore described brake booster, in which only the modified elements are illustrated in figs. 6, 7 and 8, while the remaining elements and conditions correspond to those of exemplified embodiment according to figs. 1 to 5.

In the exemplified embodiment according to figs. 6 to 8, the operability of switch means 88 is monitored. It is taken into account that switch means 88 is used relatively seldomly in the exemplified embodiment according to figs. 1 to 5. If a so-called emergency braking does occur wherein the pedal is pressed down extremely firmly and the driver abruptly stops the emergency braking operation by releasing the brake pedal, it is possible that a non-functioning switch means 88 has negative effects. This is prevented in the modification of the brake system according to figs. 6, 7 and 8. If it is found in the check of the operability of switch means 88 that the latter does not function, the electronic control of the brake booster gives consideration to said fact in that, upon failure of switch means 88, no particular maximum brake amplification is provided anymore, also not in the case of a so-called emergency or full braking operation. It is of course possible to detect a malfunctioning of switch means 88 in the usual manner during the electronic check of the vehicle and to display it at any suitable place (at the dashboard or the like).

As shown in figs. 6, 7 and 8, switch means 88 (as above) is mounted to path limiting element 80 (which is termed also cross bracket) in order to be able to test the operability of switch means 88. Switch means 88 includes a movable part 140 shich is shaped as a tappet and movable axially (perpendicularly with respect to the longitudinal extension of path limiting element 80).

An abutment 142 is stationarily mounted to housing 12 of the brake booster for checking switch means 88. In certain operating conditions of the brake, said abutment cooperates with movable part 140 of switch means 88. In figs. 6, 7 and 8 different operational conditions of the brake system are illustrated.

In Fig. 6, the brake system is illustrated in its inoperative condition. As stated hereinabove, actuator 22 (not illustrated in figs. 6 to 8), and along with it path limiting element 80, is in said condition urged to the right in the figures. In this position, path limiting element 80 abuts abutment 142, and movable part 140 of switch means 88 is pressed into an assigned recess in path limiting element 80, which is illustrated in fig. 6 by broken lines. Switch means 88 comprises two contacts 144, 146. According to fig.6, movable part 140 having been pressed into path limiting element 80 (cf. fig. 7) acts in such a manner that the one switch contact 144 is opened, while the other switch contact is closed. Checking the operability of switch means 88 can thus be performed already in the inoperative condition of the brake.

Fig. 7 shows the condition of a so-called normal braking operation (in other words no emergency or full braking with maximum braking amplification). From the above description based on figs. 1 to 5 it results that a braking operation causes that path limiting element 80, as well as control housing 42, are moved in forward direction, which is to the left in the figures. This movement is effected relatively with respect to housing 12 of the brake booster. Hence, in a braking operation, the path limiting element 80, and consequently also movable part 140 of switch means 88, become detached from abutment 142 so that according to fig. 7, movable part 140 is moved out of path limiting element 80 due to the tension of a spring (the spring is not shown). According to fig. 7, the one switch contact 144 of switch means 88 is closed in said condition, while the other switch contact 146 is open. In such a braking operation, the condition of switch contacts 144, 146 is sensed by the electronic control of the brake booster which can thus check the operability of switch means 88.

Fig. 8 illustrates an abrupt stopping of an emergency or full braking operation, which is of particular interest. From the above description of the brake booster it results that when such stopping of the braking operation is effected, control housing 42 (connected to movable partition 18) remains in the advanced position for a certain period of time still (displaced to the left in the figures), while actuator 22 along with path limiting element 80 is urged into the rear position (to the right in the figures), in response to the spring forces. As described above with the aid of figs. 1 to 5, movable part 140 of switch means 88 engages then abutment 90 which is fixedly connected to control housing 42. The electronic control "knows" that previously a brake amplification was carried out at maximum level and interprets the signal of switch means 88 being in the position illustrated in fig. 8 such that the electronic control of the brake booster is changed from maximum brake amplification (emergency or full braking) to assume the normal brake amplifier response curve.

Depending on the functional condition of the brake system, movable part 140 of switch means 88 is therefore actuated by two elements, by abutment 142, on the one hand, which is stationary with respect to the brake booster, and on the other hand by abutment 90 which is movable with respect to the brake booster and coupled to control housing 42. To this end, the face end of movable part 140 is positioned such that its upper half is gripped by abutment 90, while its lower half is gripped by abutment 142.

Each operation of the brake entails an actuation of switch means 88 so that its operability can continuously be monitored. In a first condition (fig. 8) switch means 88 supplies a signal to the electronic control of the brake booster for reducing or stopping the maximal brake amplification. In a second condition (fig. 7), switch means 88 does not supply a signal for stopping the maximal brake amplification, but it is still switched on, to monitor its function.

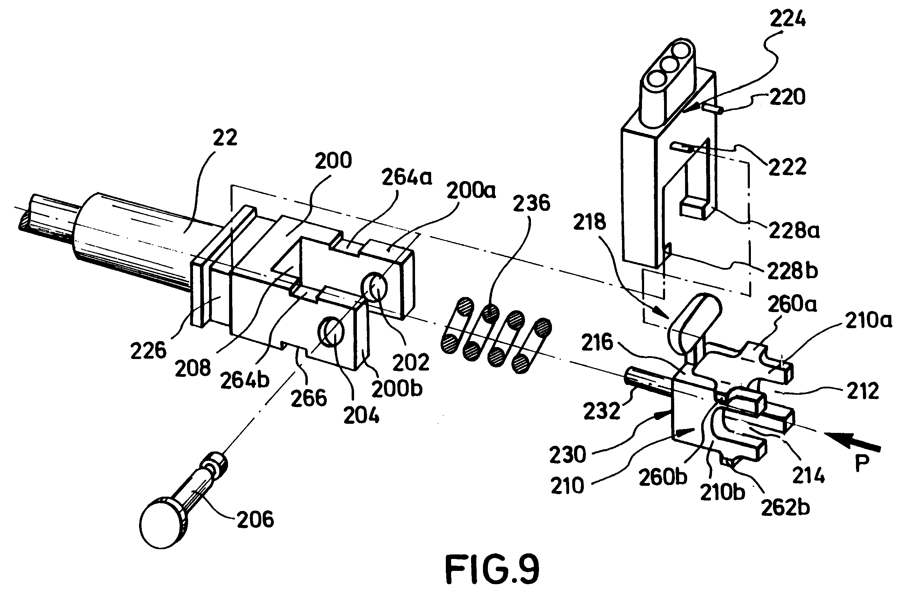

Fig. 9 illustrates the front end of the rod-shaped actuator 22 having a forked joint connection 200 integrally formed at its free end. One passage 202, 204 is formed in each leg 200a, 200b of fork joint 200 through which a transverse bolt 206 may be passed. A free space 208 is provided between the two legs 200a, 200b of fork joint 200 into which a contoured, U-shaped carrier 210 may be introduced.

Carrier 210 which is bent or punched from sheet material comprises two legs 210a, 210b, each of which having at its free end an open elongate recess 212, 214 in alignment with the passages 202,204 or the transverse bolt 206. A release surface 218 is integral with carrier 210 and extends laterally upwardly in the region of its transverse leg 216, said release surface 218 being dimensioned such that it projects laterally beyond the fork joint head200 and is adapted to act simultaneously on two actuating pins 220, 222 of a signal generation means 224 constituted by two micro switches when carrier 210 is moved in the direction of arrow P in response to an actuation movement of the brake pedal.

Signal generation means 224 is a substantially a U-shaped member of plastic material which contains the two micro switches in its transverse web and is received in a groove 226 of the fork joint head 200 transversely to the direction of movement of the actuator 22. Signal generation means 224 is made of an elastic material allowing to bend apart the two legs of the signal generation means to an extent that latch lugs 228a, 228b provided at each of the ends of the legs embrace groove 226 and safely and lastingly fix signal generation means 224 to fork joint head 200.

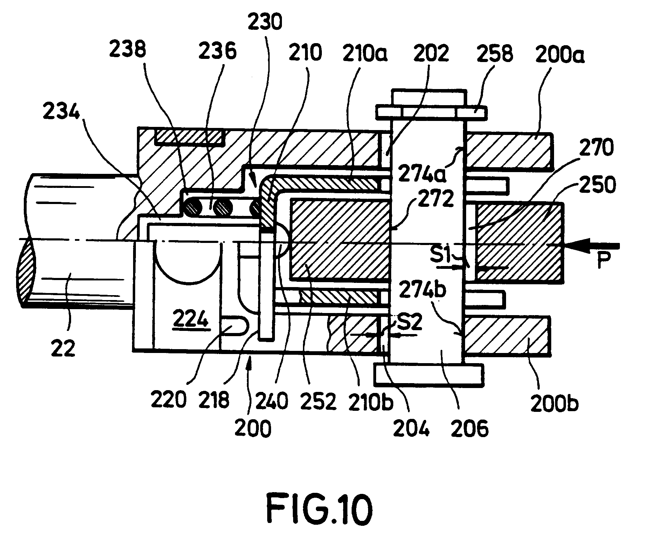

Carrier 210 is provided at its end face 230 facing fork joint head 200, with a centrally disposed guide pin 223 which is received with play in a stepped bore 234 (cf. fig.10) in fork joint head 200. Guide pin 232 is surrounded by a helical spring 236 which is supported at a step 238 on the stepped bore 234 and rests with its other end on end face 230 of carrier 210. Guide pin 232 is designed as a rivet bolt whose rivet head 240 extends into the space between the two legs 210a, 210b of carrier 210.

In the assembled condition, a first actuator 250 transmitting an actuation movement of a brake pedal (not illustrated) in the direction of arrow P, is received between legs 210a, 210b of carrier 210 as well as between legs 200a, 200b of fork joint head 200 in such a way that the free end face 252 of the first actuator rests against rivet head 240. Helical spring 236 is responsible for a resilient and snug abutting of rivet head 240 against end face 252 of first actuator 250.

Transverse bolt 206 extends through the two legs 200a, 200b of fork joint head 200, legs 210a, 210b of the carrier, and first actuator 250. A safety ring 258 at transverse bolt 206 effects a non-losable connection between the first actuator 250 and fork head 200 of the second actuator 220 as well as carrier 210 received between the same.

Carrier 210 has transversely protruding guide or stop brackets 260a, 260b, 262a, 262b provided, in each case, at the sides of the two legs 210a, 210b, which engage corresponding guide grooves 264a, 264b, 266a, 266b at the sides of legs 200a, 200b and guarantee a coaxial guiding of carrier 210 in fork joint head 200 and, in the pre-assembled condition of the actuator system, prevent the carrier from falling out - when transverse bolt 206 is missing - and still allow axial movabiltiy and thus safe actuation of signal generation means 224. In the built-in or assembled condition, guide pin 232 in stepped bore 234 takes over the axial guiding of carrier 210 in fork joint head 200, and transverse bolt 206 limits the axial movability of the individual elements with respect to each other in the manner described hereinafter.

In its released condition, the brake pedal is maintained in the release position by its return spring. Therefore, transverse bolt 206 situated in through bore 270 in the first actuator 250 abuts bore shoulder 272 (left in fig. 10) which faces free end 252 of first actuator 250. The internal diameter of bore 270 is larger than the external diameter of transverse bolt 206 so that first actuator 250 can cover a blank path, or play, S1 whose length corresponds to the difference in the diameters of bore 270 and transverse bolt 206 before actuator 250 moves transverse bolt 206 in the direction of arrow P. Helical spring 236 urges carrier 210 and hence rivet head 240 opposite to the direction of arrow P (to the right), with the consequence that transverse bolt 206 is through bore shoulder 272 moved opposite to the arrow direction P until transverse bolt 206 gets in the region of the through opening 202, 204 in legs 200a, 200b of fork joint head 200 to rest against the respective right-hand bore shoulders 274a, 274b thereof. Since also the internal diameter of through openings 202, 204 is larger than the external diameter of transverse bolt 206, it is possible for the first actuator to become displaced by a blank path or distance S2 in the direction of arrow P, before a further actuation of first actuator 250 causes a displacement of fork joint head 200 and the connected second actuator 22.

Independent of the fact that the first actuator 250 has to cover a total blank path, or play, SL = S1 + S2 before the actuation movement of the same in the direction of arrow P leads to a displacement of second actuator 22, the slightest displacement of first actuator 250 in the direction of arrow P via its end face 252 and rivet head 240 causes already a displacement of release surface 218 in the direction of actuating pins 220, 222 of signal generation means 224 since, due to the action of helical spring 236, carrier 210 rests resiliently against the end face 252 of the first actuator 250, via rivet head 240. In the same way, already upon a slight release of the brake pedal, the tension of helical spring 236 causes that carrier 210 having release surface 218 integrally formed thereon becomes detached from pins 220 of signal generation means 224 so that a respective signal is supplied to the control electronics of the brake booster.

Since the signal generation means 224 comprises two control elements - which by the way may be non-impact contacts, for instance, Hall elements - a redundant, and hence safe, signal generation as well as an electro-mechanical check of its function is possible.

With respect to return springs 54, 68 (cf. fig.2) of the brake booster, the spring force of helical spring 236 is dimensioned such that, in all cases, first helical spring 236 is compressed when the brake pedal is actuated in the direction of arrow P so that signal generation means 224 is actuated before a displacement of second actuator 22 takes place.

The afore-mentioned signal generation means provide a signal which is processed by the electronical control device to switch off the electronic control function when the brake pedal is released by the driver. If however, the signal generation means fails after the initiation of the electronically supported braking, a release of the brake pedal could not be sensed by the electronic control device. Consequently, the vehicle would be slowed down to a stand still. In order to avoid that such an undesired situation might occur, and to have a fail-safe, redundant system it is desirable to have the following (additional) generation means incorporated into the brake booster.

The above embodiments have in common, that they are able to sense a interruption of supported braking by providing a second signal generation means independent from the first signal generation means in case one of the two fails after the automatic (supported) braking has been initiated.

**Claims**

1. A vehicle brake system including an electronically controlled brake booster (10) in which the maximally possible amplification is initiated when the actuation velocity of the brake pedal exceeds a given threshold value, the booster comprising

   - an actuator (22) transmitting the actuating movement of a brake pedal to a master brake cylinder, and
   - having assigned a path limiting element (80) which limits the axial actuating movement of the actuator (22) in that it is received between two abutments (90, 92), wherein

- the actuator (22) acts on a disk (70) adapted to engage an element (60) which acts like an incompressible liquid, and onto which a hydraulic force opposed to the movement of the actuator (22) that is caused by the brake pedal may act, which in turn causes a counter-movement of the disk (70) and the actuator (22), wherein the movability of the disk (70) in the direction of the actuator (22) is limited by a stop means (72) characterized in that

- a switch means (88) is actuated by the path limiting element (80) together with one of the abutments (90), said switch means supplying a signal for detecting the brake pedal release movement to the control of the brake booster when the path limiting element (80) abuts the one abutment (90), and in that

- a distance (A) of the stop means (72) from said one of the abutments (90) by which, together with the path limiting element (80), the switch means (88) is actuated, is dimensioned such that, when the disk (70) abuts the stop means (72), the path limiting element (80) assigned to the actuator (22) has such a distance to said one abutment (90) that, for actuating the switch means (88), the path limiting element (80) still has to cover a distance (S) in the direction of said one abutment (90).

2. The vehicle brake system as defined in claim 1 characterized in that the distance (S) is so dimensioned that an erroneous operation of the switch means (88) due to a resetting of the actuator (22) or the disk (72) by the hydraulic force supplied by the brake system is excluded.

3. The vehicle brake system as defined in claim 1 characterized in that the switch means (88) is disposed on the path limiting element (80).

4. The vehicle brake system as defined in claim 1 characterized in that the switch means (88) together with said one abutment (90) actuating the path limiting element (80) is slidable with respect to the other abutment (92) coaxially to the actuator (22).

5. The vehicle brake system as defined in one or more of claims 1 to 4 characterized in that the distance (S) is dimensioned such that an erroneous operation of the switch means (88) due to pressure impacts caused by the ABS-mode of operation is excluded, which are directed in the opposite direction of the force exerted by the brake pedal and result in a relative movement between the path limiting element (80) assigned to the actuator (22) and the abutment (90) which, together with the path limiting element (80), causes an actuation of the switch means (88).

6. The vehicle brake system as defined in one or more of the preceding claims characterized in that the spring force of a spring element (54, 68) acting upon the actuator (22) is so dimensioned that, in the absence of a force acting on the brake pedal, the actuator (22) returns from an operative position to an inoperative position in which the switch means (88) supplies a signal.

7. The vehicle brake system as defined in one or more of the preceding claims characterized in that a signal supplied by the switch means (88) is evaluated following a previous initiation of a maximum brake boosting operation in the vehicle brake system such that the brake booster (10) is returned to its normal brake boosting operation without delay.

8. The vehicle brake system as defined in one or more of the preceding claims characterized in that the path limiting element (80) is a clamping element embracing the actuator (22).

9. The vehicle brake system as defined in the preceding claim charcterized in that the switch means (88) is detachably mounted in the path limiting element (80).

10. The vehicle brake system as defined in any one of claims 1 to 8 characterized in that the switch means (88) is disposed in said one abutment (90).

11. The vehicle brake system as defined in claim 1 characterized in that

- upon releasing the brake pedal after a braking operation, the switch means (88) comes into a first condition in which it supplies a signal to the electronic control of the brake booster to reduce or terminate a brake boosting operation, wherein,
- the switch (88) is brought to a second condition when the brake is actuated in which it does not supply a signal for terminating the brake boosting operation and in which its function is monitored, and
- the switch (88) comprises a movable part (140) which adjusts the two conditions and which is movable both by a member (142) that is stationary with respect to the housing (12) of the brake booster (10) and by a member (42, 90) that is movable with respect to the housing (12) of the brake booster (10).

12. A vehicle brake system including an electronically controlled brake booster (10), in which the maximally possible amplification is initiated when the actuation velocity of the brake pedal exceeds a given threshold value, the booster comprising

   - a first actuator (250) which is connected to a second actuator (22) for transmitting to the same an actuating movement (P) of a brake pedal, wherein the second actuator (22) transmits the movement to a master brake cylinder,
   - a signal generation means (224) disposed in the region (200) connecting the first actuator with the second actuator (250, 22) for generating a signal for detecting the brake pedal release movement to be supplied to the control of the brake booster (10), characterized in that
   - a trigger means (218) cooperates with the signal generation means (224), said trigger means acts on the signal generation means (224) upon an actuation movement of the brake pedal,
   and in that
   the trigger means (218) is mounted to a carrier (210) which is movable in the direction to the actuating movement (P) by a distance (S) that is greater than the stroke of the actuating movement (P) required to actuate the signal generation means (224).

13. The vehicle brake system as defined in the preceding claim
characterized in that
the connection of the first actuator to the second actuator (250, 22) is effected through a fork joint, in which a transverse pin (206) is provided articulating the first actuator (250) to the second actuator (22) such that an actuating movement of the brake pedal moves the first actuator (250) through a blank path (S) where no actuating movement (P) is transmitted to the second actuator (22), and an actuation of the signal generation means (224) is effected through the trigger means (219).

14. The vehicle brake system as defined in the preceding claim
characterized in that
the carrier (210) is resiliently biased against the actuating movement (P) of the brake pedal.

15. The vehicle brake system as defined in the preceding claim

characterized in that
the carrier (210) is guided on the fork joint (200) so as to be movable in a longitudinal direction.

16. The vehicle brake system as defined in the preceding claim
characterized in that
the signal generation means (224) comprises two switch elements which supply redundant signals to the control means of the brake booster (10).

17. The vehicle brake as defined in the preceding claim
characterized in that
the carrier (210) is received in the fork joint (200).

**Patentansprüche**

1. Fahrzeugbremsanlage mit einem elektronisch gesteuerten Bremskraftverstärker (10), bei dem die maximal mögliche Verstärkung veranlaßt wird, wenn die Betätigungsgeschwindigkeit des Bremspedals einen gegebenen Schwellwert überschreitet, wobei der Kraftverstärker folgendes umfaßt:

   - ein die Betätigungsbewegung eines Bremspedals zu einem Hauptbremszylinder weiterleitendes Betätigungsglied (22), dem
   - ein Wegbegrenzungselement (80) zugeordnet ist, das die axiale Betätigungsbewegung des Betätigungsgliedes (22) begrenzt, indem es zwischen zwei Anschlägen (90, 92) aufgenommen ist, wobei
   - das Betätigungsglied (22) auf eine Scheibe (70) wirkt, die mit einem wie eine inkompressible Flüssigkeit wirkenden Teil (60) in Eingriff bringbar ist, auf das eine der durch das Bremspedal hervorgerufene Bewegung des Betätigungsgliedes (22) entgegengerichtete Hydraulikkraft wirken kann, die wiederum eine Gegenbewegung der Scheibe (70) und des Betätigungsgliedes (22) bewirkt, wobei die Bewegbarkeit der Scheibe (70) in Richtung auf das Betätigungsglied (22) durch eine Anschlageinrichtung (72) begrenzt ist,
   dadurch gekennzeichnet, daß
   - ein Schaltelement (88) durch das Wegbegrenzungselement (80) zusammen mit einem der Anschläge (90) betätigt wird, wobei das Schaltelement ein Signal zum Erfassen der Freigabebewegung des Bremspedals an die Steuerung des Bremskraftverstärkers abgibt, wenn das Wegbegrenzungselement (80) an einem Anschlag (90) anliegt, und
   - ein Abstand (A) der Anschlageinrichtung (72) von dem einen der Anschläge (90), durch den zusammen mit dem Wegbegrenzungselement (80) das Schaltelement (88) betätigt wird, so bemessen ist, daß bei Anliegen der Scheibe (70) an der Anschlageinrichtung (72) das dem Betätigungsglied (22) zugeordnete Wegbegrenzungselement (80) zum Anschlag (90) einen solchen Abstand hat, daß zur Betätigung des Schaltelements (88) das Wegbegrenzungselement (80) immer noch eine Strecke (S) in Richtung auf den Anschlag (90) zurückzulegen hat.

2. Fahrzeugbremsanlage nach Anspruch 1, dadurch gekennzeichnet, daß die Strecke (S) so bemessen ist, daß eine Fehlbetätigung des Schaltelements (88) aufgrund einer Rückstellung des Betätigungsgliedes (22) oder der Scheibe (72) durch die von der Bremsanlage bereitgestellte Hydraulikkraft ausgeschlossen ist.

3. Fahrzeugbremsanlage nach Anspruch 1, dadurch gekennzeichnet, daß das Schaltelement (88) an dem Wegbegrenzungselement (80) angeordnet ist.

4. Fahrzeugbremsanlage nach Anspruch 1, dadurch gekennzeichnet, daß das Schaltelement (88) zusammen mit dem das Wegbegrenzungselement (80) betätigenden Anschlag (90) gegenüber dem anderen Anschlag (92) koaxial zu dem Betätigungsglied (22) verschiebbar ist.

5. Fahrzeugbremsanlage nach einem oder mehreren der Ansprüche 1 bis 4, dadurch gekennzeichnet, daß die Strecke (S) so bemessen ist, daß eine Fehlbetätigung des Schaltelements (88) aufgrund von aus dem ABS-Betrieb herrührenden Druckstößen ausgeschlossen ist, die gegen die von dem Bremspedal ausgeübte Kraft gerichtet sind und zu einer Relativbewegung zwischen dem dem Betätigungsglied (22) zugeordneten Wegbegrenzungselement (80) und dem Anschlag (90) führen, der zusammen mit dem Wegbegrenzungselement (80) eine Betätigung des Schaltelements (88) bewirkt.

6. Fahrzeugbremsanlage nach einem oder mehreren der vorstehenden Ansprüche, dadurch gekennzeichnet, daß die Federkraft eines Federelements (54, 68), die das Betätigungsglied (22) beaufschlagt, so bemessen ist, daß bei Fehlen einer auf das Bremspedal wirkenden Kraft das Betätigungsglied (22) aus einer Betätigungsstellung in eine unbetätigte Stellung zurückkehrt, in der das Schaltelement (88) ein Signal abgibt.

7. Fahrzeugbremsanlage nach einem oder mehreren der vorstehenden Ansprüche, dadurch gekennzeichnet, daß ein von dem Schaltelement (88) abgegebenes Signal im Anschluß an eine vorangegangene Auslösung einer maximalen Bremskraftverstärkung in der Fahrzeugbremsanlage dahingehend ausgewertet wird, daß der Bremskraftverstärker (10) unverzüglich in seinen normalen Bremskraftverstärkungsbetrieb zurückgeführt wird.

8. Fahrzeugbremsanlage nach einem oder mehreren der vorstehenden Ansprüche, dadurch gekennzeichnet, daß das Wegbegrenzungselement (80) ein das Betätigungsglied (22) umgreifendes Klemmelement ist.

9. Fahrzeugbremsanlage nach dem vorstehenden Anspruch, dadurch gekennzeichnet, daß das Schaltelement (88) in dem Wegbegrenzungselement (80) lösbar befestigt ist.

10. Fahrzeugbremsanlage nach einem der Ansprüche 1 bis 8, dadurch gekennzeichnet, daß das Schaltelement (88) in dem einen Anschlag (90) angeordnet ist.

11. Fahrzeugbremsanlage nach Anspruch 1, dadurch gekennzeichnet, daß

- das Schaltelement (88) bei Freigabe des Bremspedals nach einer Bremsung einen ersten Zustand annimmt, in dem es ein Signal an die elektronische Steuerung des Bremskraftverstärkers abgibt, um eine Bremskraftverstärkung zu verringern oder zu beenden, und

- das Schaltelement (88) bei Betätigen der Bremse in einen zweiten Zustand gebracht wird, in dem es kein Signal zum Beenden der Bremskraftverstärkung abgibt und in dem seine Funktion überwacht wird; und

- das Schaltelement (88) ein die beiden Zustände einstellendes bewegliches Teil (140) aufweist, das sowohl durch ein relativ zum Gehäuse (12) des Bremskraftverstärkers (10) ortsfestes Bauteil (142) als auch durch ein relativ zum Gehäuse (12) des Bremskraftverstärkers (10) bewegliches Bauteil (42, 90) bewegbar ist.

12. Fahrzeugbremsanlage mit einem elektronisch gesteuerten Bremskraftverstärker (10), bei dem die maximal mögliche Verstärkung veranlaßt wird, wenn die Betätigungsgeschwindigkeit des Bremspedals einen gegebenen Schwellwert überschreitet, wobei der Kraftverstärker folgendes umfaßt:

- ein erstes Betätigungsglied (250), das mit einem zweiten Betätigungsglied (22) verbunden ist, um auf dieses eine Betätigungsbewegung (P) eines Bremspedals zu übertragen, wobei das zweite Betätigungsglied (22) die Bewegung zu einem Hauptbremszylinder weiterleitet,

- eine im Verbindungsbereich (200) des ersten mit dem zweiten Betätigungsglied (250, 22) angeordnete Signalgebereinrichtung (224) zum Generieren eines Signals zum Erfassen der Freigabebewegung des Bremspedals an die Steuerung des Bremskraftverstärkers (10), dadurch gekennzeichnet, daß
- ein mit der Signalgebereinrichtung (224) zusammenwirkender Auslöser (218) bei einer Betätigungsbewegung des Bremspedals auf die Signalgebereinrichtung (224) einwirkt, und der Auslöser (218) an einem Träger (210) angebracht ist, der in Richtung der Betätigungsbewegung (P) um eine Strecke (S) verschiebbar ist, die größer ist als der zur Betätigung der Signalgebereinrichtung (224) erforderliche Hub der Betätigungsbewegung (P).

13. Fahrzeugbremsanlage nach dem vorstehenden Anspruch,
   dadurch gekennzeichnet, daß
   die Verbindung zwischen dem ersten und dem zweiten Betätigungsglied (250, 22) durch ein Gabelgelenk (200) gebildet ist, in dem ein Querzapfen (206) vorgesehen ist, der das erste Betätigungsglied (250) mit dem zweiten Betätigungsglied (22) gelenkig so verbindet, daß eine Betätigungsbewegung des Bremspedals das erste Betätigungsglied (250) über eine Leerstrecke (S) bewegt, während der keine Betätigungsbewegung (P) auf das zweite Betätigungsglied (22) übertragen wird, und eine Betätigung der Signalgebereinrichtung (224) durch den Auslöser (218) erfolgt.

14. Fahrzeugbremsanlage nach dem vorstehenden Anspruch,
   dadurch gekennzeichnet, daß
   der Träger (210) gegen die Betätigungsbewegung (P) des Bremspedals federnd vorgespannt ist.

15. Fahrzeugbremsanlage nach dem vorstehenden Anspruch,
   dadurch gekennzeichnet, daß
   der Träger (210) in dem Gabelgelenk (200) längsverschiebbar geführt ist.

16. Fahrzeugbremsanlage nach dem vorstehenden Anspruch,
   dadurch gekennzeichnet, daß
   die Signalgebereinrichtung (224) zwei Schaltelemente aufweist, die redundante Signale an die Steuerung des Bremskraftverstärkers (10) abgeben.

17. Fahrzeugbremsanlage nach dem vorstehenden Anspruch,

dadurch gekennzeichnet, daß
der Träger (210) in dem Gabelgelenk (200) aufgenommen ist.

## Revendications

1. Système de freinage de véhicule comprenant un amplificateur de freinage commandé électroniquement (10) dans lequel l'amplification maximum possible est déclenchée lorsque la vitesse d'actionnement de la pédale de frein dépasse une valeur de seuil donnée, l'amplificateur comprenant

   - un actionneur (22) transmettant le mouvement d'actionnement d'une pédale de frein à un maître cylindre de frein, et
   - auquel est associé un élément de limitation de trajet (80) qui limite le mouvement d'actionnement axial de l'actionneur (22) du fait qu'il est reçu entre deux butées (90, 92), dans lequel
   - l'actionneur (22) agit sur un disque (70) adapté pour être en prise avec un élément (60) qui se comporte comme un liquide incompressible, et sur lequel une force hydraulique opposée au mouvement de l'actionneur (22) qui est provoqué par la pédale de frein peut agir, ce qui provoque à son tour un mouvement opposé du disque (70) et de l'actionneur (22), la mobilité du disque (70) dans la direction de l'actionneur (22) étant limitée par des moyens d'arrêt (72) caractérisé en ce que
   - un moyen de commutation (88) est actionné par l'élément de limitation de trajet (80) avec l'une des butées (90), lesdits moyens de commutation transmettant un signal pour détecter le mouvement de libération de la pédale de frein à la commande de l'amplificateur de frein lorsque l'élément de limitation de trajet (80) vient buter contre ladite une des butées (90), et en ce que
   - la distance (A) des moyens d'arrêt (72) à ladite une des butées (90) par laquelle, avec l'élément de limitation de trajet (80), les moyens de commutation (88) sont actionnés, est fixée de façon que, lorsque le disque (70) bute contre les moyens d'arrêt (72), l'élément de limitation de trajet (80) affecté à l'actionneur (22) a une distance à ladite une butée (90) telle que, pour actionner les moyens de commutation (88), l'élément de limitation de trajet (80) doit encore couvrir une distance (S) dans la direction de ladite une butée (90).

2. Système de freinage de véhicule selon la revendication 1
   caractérisé en ce que
   la distance (S) est fixée de façon qu'une opération erronée des moyens de commutation (88) due à une remise à l'état initial de l'actionneur (22) ou du disque (72) par la force hydraulique fournie par le système de freinage soit exclue.

3. Système de freinage de véhicule selon la revendication 1 caractérisé en ce que les moyens de commutation (88) sont disposés sur l'élément de limitation de trajet (80).

4. Système de freinage de véhicule selon la revendication 1 caractérisé en ce que les moyens de commutation (88) avec ladite une butée (90) actionnant l'élément de limitation de trajet (80) peuvent coulisser par rapport à l'autre butée (92) coaxialement avec l'actionneur (22).

5. Système de freinage de véhicule selon une ou plusieurs des revendications 1 à 4 caractérisé en ce que la distance (S) est fixée de façon qu'une opération erronée des moyens de commutation (88) due aux pointes de pression provoquées par le mode de fonctionnement ABS soit exclue, qui sont dirigées dans la direction opposée à celle de la force exercée par la pédale de frein et aboutissent à un mouvement relatif entre l'élément de limitation de trajet (80) affecté à l'actionneur (22) et la butée (90) qui, avec l'élément de limitation de trajet (80), provoque un actionnement des moyens de commutation (88).

6. Système de freinage de véhicule selon l'une ou plusieurs des revendications précédentes caractérisé en ce que la force élastique d'un élément de ressort (54, 68) agissant sur l'actionneur (22) est fixée de façon que, en l'absence d'une force agissant sur la pédale de frein, l'actionneur (22) revienne d'une position active à une position inactive dans laquelle les moyens de commutation (88) fournissent un signal.

7. Système de freinage de véhicule selon l'une ou plusieurs des revendications précédentes caractérisé en ce que un signal fourni par les moyens de commutation (88) est évalué à la suite du déclenchement antérieur d'une opération d'amplification de freinage maximum dans le système de freinage de véhicule de façon que l'amplificateur de freinage (10) soit ramené à son fonctionnement d'amplification de freinage normal sans retard.

8. Système de freinage de véhicule selon l'une ou plusieurs des revendications précédentes caractérisé en ce que l'élément de limitation de trajet (80) est un élément de serrage embrassant l'actionneur (22).

9. Système de freinage de véhicule selon la revendication précédente caractérisé en ce que les moyens de commutation (88) sont montés amovibles dans l'élément de limitation de trajet (80).

10. Système de freinage de véhicule selon l'une quelconque des revendications 1 à 8 caractérisé en ce que les moyens de commutation (88) sont disposés dans ladite une butée (90).

11. Système de freinage de véhicule selon la revendication 1 caractérisé en ce que

- lors de la libération de la pédale de frein après une opération de freinage, les moyens de commutation (88) parviennent à un premier état dans lequel ils transmettent un signal à la commande électronique de l'amplificateur de freinage pour réduire ou terminer une opération d'amplification de freinage, dans lequel,
- le commutateur (88) est amené à un deuxième état lorsque le frein est actionné, dans lequel il ne transmet pas de signal pour terminer l'opération d'amplification de freinage et dans lequel son fonctionnement est surveillé, et
- le commutateur (88) comprend une partie mobile (140) qui règle les deux états et qui peut être déplacée à la fois par un élément (142) qui est fixe par rapport au logement (12) de l'amplificateur de freinage (10) et par un élément (42, 90) qui est mobile par rapport au logement (12) de l'amplificateur de freinage (10).

12. Système de freinage de véhicule comprenant un amplificateur de freinage commandé électroniquement (10) dans lequel l'amplification maximum possible est déclenchée lorsque la vitesse d'actionnement de la pédale de frein dépasse une valeur de seuil donnée, l'amplificateur comprenant

- un premier actionneur (250) qui est relié à un deuxième actionneur (22) pour transmettre à celui-ci un mouvement d'actionnement (P) d'une pédale de frein, dans lequel le deuxième actionneur (22) transmet le mouvement à un maître cylindre de frein,
- un moyen de génération de signal (224) disposé dans la région (200) raccordant le premier actionneur au deuxième actionneur (250, 22) pour générer un signal pour détecter le mouvement de libération de la pédale de frein à transmettre à la commande de l'amplificateur de freinage (10), caractérisé en ce que
- des moyens de gâchette (218) coopèrent avec les moyens de génération de signal (224), lesdits moyens de gâchette agissent sur les moyens de génération de signal (224) lors d'un mouvement d'actionnement de la pédale de frein, et en ce que les moyens de gâchette (218) sont montés sur un support (210) qui peut être déplacé dans la direction du mouvement d'actionnement (P) d'une distance (S) qui est plus grande que la course du mouvement d'actionnement (P) nécessaire pour actionner les moyens de génération de signal (224).

13. Système de freinage de véhicule selon la revendication précédente
caractérisé en ce que
le raccordement du premier actionneur au deuxième actionneur (250, 22) est effectué par une articulation à fourche, laquelle comprend une broche transversale (206) articulant le premier actionneur (250) au deuxième actionneur (22) de façon qu'un mouvement d'actionnement de la pédale de frein déplace le premier actionneur (250) sur un trajet sans effet (S) dans lequel aucun mouvement d'actionnement (P) n'est transmis au deuxième actionneur (22), et un actionnement des moyens de génération de signal (224) est effectué par les moyens de gâchette (219).

14. Système de freinage de véhicule selon la revendication précédente
caractérisé en ce que
le support (210) est poussé élastiquement à l'encontre du mouvement d'actionnement (P) de la pédale de frein.

15. Système de freinage de véhicule selon la revendication précédente
caractérisé en ce que
le support (210) est guidé sur l'articulation à fourche (200) de façon à pouvoir être déplacé dans une direction longitudinale.

16. Système de freinage de véhicule selon la revendication précédente
caractérisé en ce que
les moyens de génération de signal (224) comprennent deux éléments de commutation qui fournissent des signaux redondants aux moyens de commande de l'amplificateur de freinage (10).

17. Frein de véhicule selon la revendication précédente
caractérisé en ce que
le support (210) est reçu dans l'articulation à fourche (200).

FIG.1

FIG.2

FIG. 3

EP 0 708 722 B1

FIG.4

FIG.5

EP 0 708 722 B1

FIG.6

FIG.7

FIG.8

19

EP 0 708 722 B1

FIG.9

20

EP 0 708 722 B1

FIG.10

21